# EUROPÄISCHE PATENTSCHRIFT

(11) **EP 1 544 033 B1**
(45) Veröffentlichungstag und Bekanntmachung des Hinweises auf die Patenterteilung: **17.10.2007**
(21) Anmeldenummer: 04028431.7
(22) Anmeldetag: 01.12.2004
(51) Int. Cl.: B60Q 1/04

(54) **Fahrzeugscheinwerfer mit Relativbewegung zur Karosserie für die thermische Dehnung**
Headlight for vehicle with relative movement to the vehicle for thermal dilatation
Projecteur de voiture avec mouvement relatif par rapport au châssis pour dilatation thermique

(30) Priorität: 20.12.2003 DE 10360182
(43) Veröffentlichungstag der Anmeldung: 22.06.2005
(73) Patentinhaber: REHAU AG + Co, 95111 Rehau (DE)
(72) Erfinder: König, Thomas, 35055 Cullman Alabama (US); Pfretzschner, Tobias, 95032 Hof (DE); Mett, Thomas, 95182 Tauperlitz (DE); Lux, Stefan, 95182 Döhlau (DE); Herrmann, Stefan, 95111 Rehau (DE)

(56) Entgegenhaltungen:
- DE-A1- 10 048 279
- FR-A- 2 748 708
- US-A- 5 143 331

## Beschreibung

Die Erfindung betrifft einen Fahrzeugscheinwerfer nach dem Oberbegriff des Anspruchs 1. Ferner betrifft die Erfindung ein Kraftfahrzeug und eine integrierte Baugruppe mit einem derartigen Fahrzeugscheinwerfer nach Anspruch 4 und 7.

Ein derartiger Fahrzeugscheinwerfer ist bekannt aus der DE 197 27 005 C2. Dort wird zum Ausgleich der unterschiedlichen thermischen Ausdehnung des Scheinwerfers und benachbarter Karosserieelemente vorgeschlagen, den Fahrzeugscheinwerfer einerseits formschlüssig mit den Karosserieelementen zu verbinden, den Scheinwerfer andererseits aber über Federmittel an weiteren Fahrzeugbauteilen so anzubringen, dass eine Relativbewegung des Scheinwerfers zu diesen Fahrzeugbauteilen möglich ist. Dies führt zu einem thermischen Ausgleich, beeinträchtigt aber die Richtungsstabilität der Leuchteinrichtung des Scheinwerfers und erhöht unerwünscht die Schwingungsneigung des Scheinwerfers.

Dokument FR 274 87 08 beschreibt also einen Scheinwerfer nach dem Oberbegriff des Anspruchs 1.

Es ist daher eine Aufgabe der vorliegenden Erfindung, einen Fahrzeugscheinwerfer der eingangs genannten Art derart weiterzubilden, dass ein Ausgleich unterschiedlicher thermischer Ausdehnungen des Scheinwerfers einerseits und der umgebenden Karosserieteile andererseits gegeben ist, wobei aber die Stabilität des Scheinwerfers, was Leuchtrichtung und Schwingungsneigung angeht, erhalten bleibt.

Diese Aufgabe ist erfindungsgemäß gelöst durch einen Fahrzeugscheinwerfer mit den Merkmalen des Kennzeichnungsteils des Anspruchs 1.

Erfindungsgemäß wurde erkannt, dass es bei den in der Umgebung eines Fahrzeugscheinwerfers vorliegenden thermischen Verhältnissen bei einem Kraftfahrzeug ausreicht, eine Relativbewegung ausschließlich längs einer definierten Richtung bereitzustellen.

Dies genügt, um den geforderten Ausgleich unterschiedlicher thermischer Ausdehnungen des Scheinwerfers einerseits und der umgebenden Karosserieteile andererseits zu schaffen. Diese Vorgabe ausschließlich eines Relativbewegungsfreiheitsgrades erhöht die Stabilität der Fahrzeugrahmenverbindungseinrichtung, so dass eine Schwingungsneigung des Fahrzeugscheinwerfers unterdrückt wird. Da das Scheinwerfergehäuse über die Karosserieverbindungseinrichtung mit dem Karosserieelement verbindbar ist, können auch unter Berücksichtigung des thermischen Ausdehnungsverhaltens vorgegebene Spaltmaße im Bereich der für den Scheinwerfer vorgesehenen Karosserieöffnung eingehalten werden. Die durch die erfindungsgemäße Ausgestaltung bereitgestellte Relativbewegungsrichtung kann insbesondere ausschließlich längs der Strahlrichtung erfolgen oder zur Strahlrichtung nur einen kleinen Winkel, z. B. < 10°, einnehmen. Diese Vorgabe der Relativbewegung in oder im Wesentlichen in Strahlrichtung führt dazu, dass beim thermischen Ausgleich eine unerwünschte Verstellung der Leuchtrichtung des Scheinwerfers nicht stattfindet. Die Karosserieverbindungseinrichtung kann ein zum Karosserieelement bzw. zum Scheinwerfergehäuse separates Bauteil sein. Alternativ ist es möglich, die Karosserieverbindungseinrichtung aus Komponenten aufzubauen, die einteilig mit dem Karosserieelement bzw. dem Scheinwerfergehäuse verbunden sind.

Eine Langlochführung nach Anspruch 2 stellt eine sichere und gleichzeitig baulich einfach auszuführende Fahrzeugrahmenverbindungseinrichtung dar.

Dies gilt entsprechend für eine Nut-Feder-Führung nach Anspruch 3.

Eine weitere Aufgabe der Erfindung ist es, ein Kraftfahrzeug mit einem derartigen Fahrzeugscheinwerfer so weiterzubilden, dass die Einhaltung eines bestimmten Spaltmaßes zwischen dem Scheinwerfergehäuse und der Karosserie im Bereich einer für den Scheinwerfer vorgesehenen Karosserieöffnung gewährleistet ist, wobei insbesondere die Stabilität des Scheinwerfers, was Leuchtrichtung und Schwingungsneigung angeht, erhalten bleiben soll.

Diese Aufgabe ist erfindungsgemäß gelöst durch ein Kraftfahrzeug mit den im Anspruch 4 angegebenen Merkmalen.

Die erfindungsgemäße Verbindung des Scheinwerfergehäuses mit der Karosserie führt dazu, dass bei einer zum Beispiel thermisch bedingten Relativbewegung der Karosserie zum Fahrzeugrahmen das Scheinwerfergehäuse automatisch so mitgeführt wird, dass die Einbauspaltmaße erhalten bleiben. Durch die Vorgabe der Relativbewegung über die Fahrzeugrahmenverbindungseinrichtung bleibt gleichzeitig die Stabilität des Scheinwerfers, was Leuchtrichtung und Schwingungsneigung angeht, erhalten.

Eine Nut-Feder-Führung nach Anspruch 5 weist eine vorteilhaft niedrige Anzahl von Bauteilen auf.

Karosserieverbindungseinrichtungen nach Anspruch 6 haben sich für die Massenproduktion als besonders geeignet herausgestellt. Bei der Rastverbindung können die hierzu gehörigen Rastelemente z. B. auch einteilig an den zu verbindenden Komponenten angeformt sein.

Eine weitere Aufgabe der Erfindung ist es, einen erfindungsgemäßen Fahrzeugscheinwerfer so weiterzubilden, dass der Fertigungsaufwand für ein hiermit ausgerüstetes Kraftfahrzeug bei der Endmontage verringert wird.

Diese Aufgabe ist erfindungsgemäß gelöst durch eine integrierte Baugruppe mit den im Anspruch 7 angegebenen Merkmalen.

Eine integrierte Baugruppe nach Anspruch 7 ermöglicht eine schnellere Endmontage des Kraftfahrzeugs.

Ausführungsbeispiele der Erfindung werden nachfolgend anhand der Zeichnung näher erläutert. In dieser zeigen:
- Fig. 1: schematisch einen Fahrzeugausschnitt mit einem mit dem Fahrzeug verbundenen Fahrzeugscheinwerfer;
- Fig. 2: eine zu Fig. 1 ähnliche Darstellung eines weiteren mit einem Fahrzeug verbundenen Fahrzeugscheinwerfers;
- Fig. 3: einen Schnitt gemäß Linie III-III in Fig. 2;
- Fig. 4: eine zu Fig. 1 ähnliche Darstellung eines Fahrzeugs mit einem weiteren Fahrzeugscheinwerfer, und
- Fig. 5: einen Schnitt gemäß Linie V-V in Fig. 4.

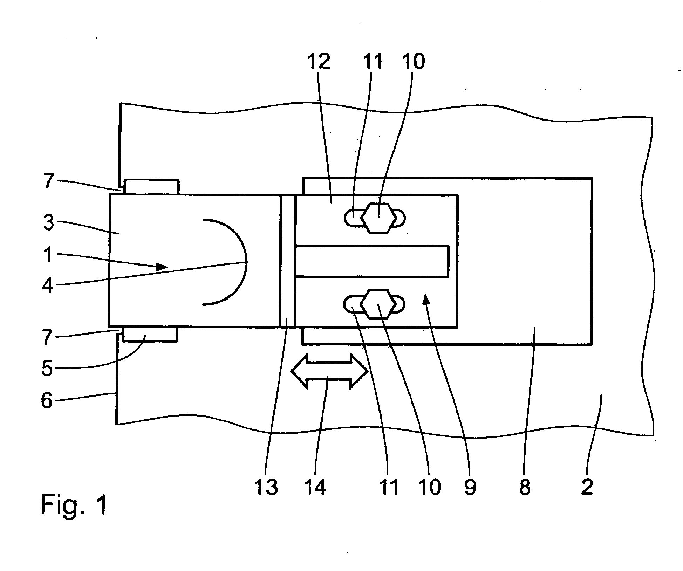

Figur 1 zeigt schematisch eine erste Ausführungsform eines Fahrzeugscheinwerfers 1 in einem Ausschnitt 2 eines Kraftfahrzeugs. Ein Scheinwerfergehäuse 3 trägt eine Lichtquelle, von der schematisch lediglich ein Reflektor 4 dargestellt ist. Das Scheinwerfergehäuse 3 ist über eine starre Karosserieverbindungseinrichtung 5 mit einem Karosserieelement 6 verbunden. Diese Verbindung ist derart, dass zwischen dem Scheinwerfergehäuse 3 und dem dieses umgebenden Abschnitt des Karosserieelements 6 ein Spalt 7 mit konstanter Spaltbreite verbleibt.

Mit einem Rahmenbauteil 8 eines ansonsten nicht dargestellten Rahmens des Kraftfahrzeugs ist das Scheinwerfergehäuse 3 über eine als Langlochführung ausgebildete fahrzeugrahmenverbindungseinrichtung 9 verbunden. Das Rahmenbauteil 8 weist hierzu zwei in Figur 1 übereinander liegende Innengewinde auf, in welche Schrauben 10 eingeschraubt sind. Letztere durchtreten zwei in Figur 1 ebenfalls übereinander liegende Langlöcher 11 eines Verbindungsbauteils 12, welches über ein Zwischenstück 13 fest mit dem Scheinwerfergehäuse 3 verbunden ist. Die Innengewinde im Rahmenbauteil 8, die Schrauben 10, die Langlöcher 11, das Verbindungsbauteil 12 sowie das Zwischenstück 13 bilden gemeinsam die Fahrzeugrahmenverbindungseinrichtung 9. Die Langlöcher 11 sind so orientiert und das Anzugsmoment der Schrauben 10 ist so gewählt, dass eine Relativbewegung des Fahrzeugscheinwerfers 1 zum Rahmenbauteil 8 längs der Strahlrichtung des Fahrzeugscheinwerfers 1 möglich ist. Diese Beweglichkeit ist in Figur 1 durch einen Doppelpfeil 14 angedeutet.

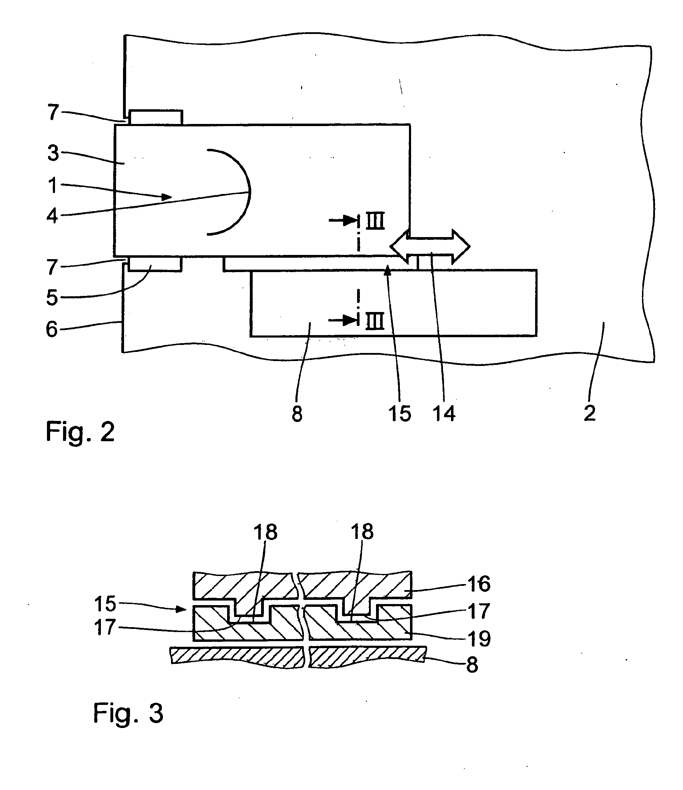

Eine weitere Ausführungsvariante eines beweglichen Fahrzeugscheinwerfers zeigen die Figuren 2 und 3. Komponenten, die denjenigen entsprechen, die vorstehend unter Bezugnahme auf die Fig. 1 beschrieben wurden, tragen die gleichen Bezugsziffern und werden nicht nochmals im einzelnen erläutert.

Bei der Ausführung nach den Figuren 2 und 3 ist eine Fahrzeugrahmenverbindungseinrichtung 15 zwischen dem Rahmenbauteil 8 und dem Scheinwerfergehäuse 3 als Nut-Feder-Führung ausgebildet. Eine Federkomponente 16 der Fahrzeugrahmenverbindungseinrichtung 15 ist einteilig am Scheinwerfergehäuse 3 angeformt, wie in Fig. 3 dargestellt. Die Federkomponente 16 weist zwei voneinander beabstandete und längs der Relativbewegungsrichtung 14 sich erstreckende Federrippen 17 auf. Zu letzteren komplementär ausgebildet sind zwei Federnuten 18 einer Nutkomponente 19 der Fahrzeugrahmenverbindungseinrichtung 15. Die Nutkomponente 19 ist in nicht dargestellter Weise fest mit dem separaten Rahmenbauteil 8 verbunden. Die Ausgestaltung der Fahrzeugrahmenverbindungseinrichtung 15 ist derart, dass eine Relativbewegung des Fahrzeugscheinwerfers 1 zum Rahmenbauteil 8 ausschließlich in Richtung des Doppelpfeils 14 möglich ist. Bei der Ausgestaltung nach den Figuren 2 und 3 ist dies dadurch realisiert, dass das Scheinwerfergehäuse 3 durch die Gewichtskraft über die Federkomponente 16 auf der Nutkomponente 19 der Fahrzeugrahmenverbindungseinrichtung 15 gehalten wird, so dass eine anderweitige Relativbewegung nicht möglich ist. Alternativ kann eine Nut-Feder-Führung nach Art der Fahrzeugrahmenverbindungseinrichtung 15 mit einer Schwalbenschwanzführung ausgestaltet sein, so dass es auf die Gewichtskraft nicht ankommt.

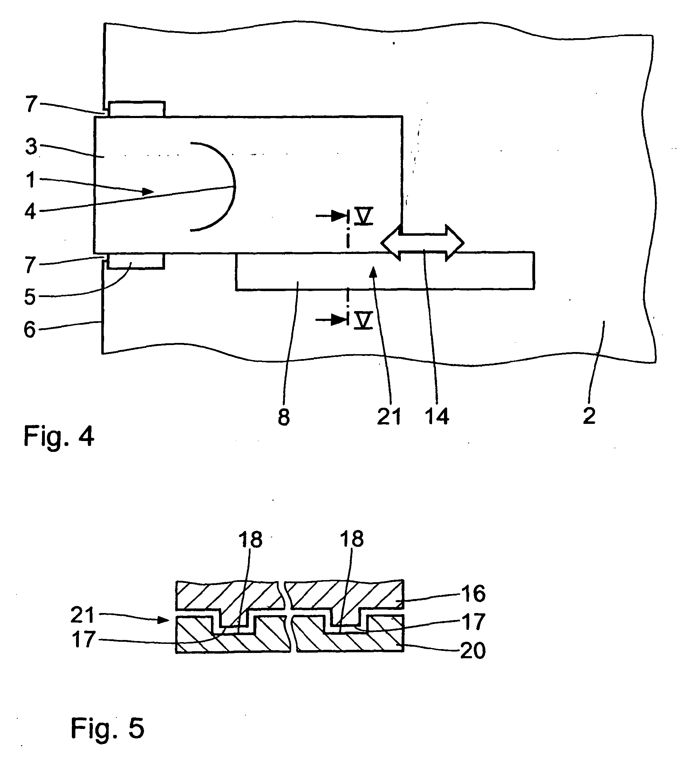

Eine weitere Ausführungsvariante eines beweglichen Fahrzeugscheinwerfers zeigen die Figuren 4 und 5. Komponenten, die oben im Zusammenhang mit den Figuren 1 bis 3 schon beschrieben wurden, tragen die gleichen Bezugsziffern und werden nicht nochmals im einzelnen erläutert. Anstelle einer separaten Nutkomponente, die am Rahmenbauteil festgelegt ist, ist bei der Ausführung nach den Figuren 4 und 5 die Nutkomponente 20 einteilig am Rahmenbauteil 8 angeformt. Ansonsten entspricht eine hierdurch gebildete fahrzeugrahmenverbindungseinrichtung 21 der Fahrzeugrahmenverbindungseinrichtung 15.

Die Karosserieverbindungseinrichtung 5 kann als Schraub-, Nut- oder Rastverbindung ausgeführt sein. Auch eine Verbindung über eine Klebstoffschicht ist denkbar.

Die im Zusammenhang mit den Figuren 1 bis 5 beschriebenen Fahrzeugscheinwerfer können Teil einer integrierten Baugruppe sein, welche noch folgende zusätzlichen Komponenten beinhalten kann:

Die Fahrzeugrahmenverbindungseinrichtung 9, 15, 21, die Karosserieverbindungseinrichtung 5, das Karosserieelement 6, z. B. einen Kotflügel, einen Energieabsorber zur Dämpfung des Zusammenpralls eines hiermit ausgerüsteten Kraftfahrzeugs mit einem weiteren Objekt, eine Scheinwerferreinigungsanlage und eine Einparkhilfevorrichtung.

## Patentansprüche

1. Fahrzeugscheinwerfer (1)
- mit einem Scheinwerfergehäuse (3), welches eine Lichtquelle haltert und
- einerseits über eine Karosserieverbindungseinrichtung (5) mit einem Karosserieelement (6) und
- andererseits über eine Fahrzeugrahmenverbindungseinrichtung (9; 15; 21) mit einem Fahrzeugrahmen (8) verbindbar ist,
**dadurch gekennzeichnet,**
**dass** scheinwerferseitige Verbindungskomponenten (11, 12, 13; 16) der Fahrzeugrahmenverbindungseinrichtung (9; 15; 21) als Nut - Feder - Führung ausgestaltet sind, dass eine Relativbewegung des Fahrzeugscheinwerfers (1) zum Fahrzeugrahmen (8) ausschließlich längs einer definierten Richtung (14) möglich ist.

2. Fahrzeugscheinwerfer nach Anspruch 1, **dadurch gekennzeichnet, dass** eine scheinwerferseitige Verbindungskomponente (11) der Fahrzeugrahmenverbindungseinrichtung (9) eine Komponente einer Langlochführung ist, die mit einer fahrzeugrahmenseitig angebrachten weiteren Komponente (10) der Langlochführung zur Führung längs der Richtung (14) der Relativbewegung verbindbar ist.

3. Fahrzeugscheinwerfer nach Anspruch 1, **dadurch gekennzeichnet, dass** eine scheinwerferseitige Verbindungskomponente (16) der Fahrzeugrahmenverbindungseinrichtung (15; 21) eine Komponente einer Nut-Feder-Führung ist, die mit einer fahrzeugrahmenseitig angebrachten weiteren Komponente (19; 20) der Nut-Feder-Führung zur Führung längs der Richtung (14) der Relativbewegung verbindbar ist.

4. Kraftfahrzeug mit einem Rahmen (8), einer Karosserie (6) und einem Fahrzeugscheinwerfer (1) nach einem der Ansprüche 1 bis 3, wobei
- das Scheinwerfergehäuse (3) im Bereich einer für den Fahrzeugscheinwerfer (1) vorgesehenen Karosserieöffnung mit der Karosserie (6) über die Karosserieverbindungseinrichtung (5) verbunden ist,
- das Scheinwerfergehäuse (3) mit dem Fahrzeugrahmen (8) über die Fahrzeugrahmenverbindungseinrichtung (9; 15; 21) verbunden ist.

5. Kraftfahrzeug nach Anspruch 4, **gekennzeichnet durch** eine Nut-Feder-Führungseinrichtung als Fahrzeugrahmenverbindungseinrichtung (21), wobei eine (20) der beiden Komponenten (16, 20) der Nut-Feder-Führungseinrichtung einteilig am Fahrzeugrahmen (8) angeformt ist.

6. Kraftfahrzeug nach Anspruch 4 oder 5, **gekennzeichnet durch** eine Schraub-, Nut- oder Rastverbindung als Karosserieverbindungseinrichtung (5).

7. Integrierte Baugruppe als Teil eines Kraftfahrzeugs mit einem Fahrzeugscheinwerfer (1) nach einem der Ansprüche 1 bis 3 und mit mindestens einer weiteren Komponente aus der nachfolgenden Aufzählung:
- Fahrzeugrahmenverbindungseinrichtung (9; 15; 21),
- Karosserieverbindungseinrichtung (5),
- Karosserieelement (6), insbesondere Kotflügel,
- Energieabsorberkomponente zur Dämpfung des Zusammenpralls eines hiermit ausgerüsteten Kraftfahrzeugs mit einem weiteren Objekt,
- Scheinwerferreinigungsanlage,
- Einparkhilfevorrichtung.

## Claims

1. Vehicle headlight (1)
- with a headlight housing (3) which holds a light source, and
- can be connected firstly to a vehicle body element (6) via a vehicle body connecting device (5) and
- secondly to a vehicle frame (8) via a vehicle frame connecting device (9; 15; 21), **characterized in that** headlight-side connecting components (11, 12, 13; 16) of the vehicle frame connecting device (9; 15; 21) are configured as a tongue-and-groove guide, and **in that** a relative movement of the vehicle headlight (1) in relation to the vehicle frame (8) is possible exclusively along a defined direction (14).

2. Vehicle headlight according to Claim 1, **characterized in that** a headlight-side connecting component (11) of the vehicle frame connecting device (9) is a component of a slotted guide which can be connected to a further component (10) of the slotted guide, which component is fitted on the vehicle-frame side, for guiding along the direction (14) of the relative movement.

3. Vehicle headlight according to Claim 1, **characterized in that** a headlight-side connecting component (16) of the vehicle frame connecting device (15; 21) is a component of a tongue-and-groove guide which can be connected to a further component (19; 20) of the tongue-and-groove guide, which component is fitted on the vehicle-frame side, for guiding along the direction (14) of the relative movement.

4. Motor vehicle with a frame (8), a vehicle body (6) and a vehicle headlight (1) according to one of Claims 1 to 3,
- the headlight housing (3) being connected to the vehicle body (6) via the vehicle body connecting device (5) in the region of a vehicle body opening provided for the vehicle headlight (1),
- the headlight housing (3) being connected to the vehicle frame (8) via the vehicle frame connecting device (9; 15; 21).

5. Motor vehicle according to Claim 4, **characterized by** a tongue-and-groove guide device as the vehicle frame connecting device (21), one (20) of the two components (16, 20) of the tongue-and-groove guide device being integrally formed on the vehicle frame (8).

6. Motor vehicle according to Claim 4 or 5, **characterized by** a screw connection, groove connection or latching connection as the vehicle body connecting device (5).

7. Integrated subassembly as part of a motor vehicle with a vehicle headlight (1) according to one of Claims 1 to 3 and with at least one further component from the following list:
- vehicle frame connecting device (9; 15; 21),
- vehicle body connecting device (5),
- vehicle body element (6), in particular wing,
- energy-absorbing component for damping the collision of a motor vehicle equipped therewith with a further object,
- headlight cleaning system,
- parking aid.

## Revendications

1. Phare de véhicule (1)
- avec un boîtier de phare (3) qui retient une source de lumière et
- qui peut être connecté d'une part par le biais d'un dispositif de connexion à la carosserie (5) à un élément de carrosserie (6) et
- qui peut être connecté d'autre part à un châssis du véhicule (8) par le biais d'un dispositif de connexion au châssis du véhicule (9 ; 15 ; 21), **caractérisé en ce que** des composants de connexion côté phare (11, 12, 13 ; 16) du dispositif de connexion au châssis du véhicule (9 ; 15 ; 21) sont réalisés en forme de guidage par rainure et clavette, et **en ce qu'**un mouvement relatif du phare de véhicule (1) par rapport au châssis du véhicule (8) est possible exclusivement le long d'une direction définie (14).

2. Phare de véhicule selon la revendication 1, **caractérisé en ce qu'**un composant de connexion côté phare (11) du dispositif de connexion au châssis du véhicule (9) est un composant d'un guidage à trou oblong, qui peut être connecté à un autre composant (10) du guidage à trou oblong monté côté châssis du véhicule pour assurer le guidage le long de la direction (14) de mouvement relatif.

3. Phare de véhicule selon la revendication 1, **caractérisé en ce qu'**un composant de connexion côté phare (16) du dispositif de connexion au châssis du véhicule (15 ; 21) est un composant d'un guidage à rainure et clavette, qui peut être connecté à un autre composant (19 ; 20) du guidage à rainure et clavette monté côté châssis du véhicule, pour assurer le guidage le long de la direction (14) de mouvement relatif.

4. Véhicule automobile comprenant un châssis (8), une carrosserie (6) et un phare de véhicule (1) selon l'une quelconque des revendications 1 à 3, dans lequel
- le boîtier de phare (3) est connecté à la carrosserie (6) par le biais du dispositif de connexion à la carrosserie (5) dans la région d'une ouverture de la carrosserie prévue pour le phare de véhicule (1),
- le boîtier de phare (3) est connecté au châssis du véhicule (8) par le biais du dispositif de connexion au châssis du véhicule (9 ; 15 ; 21).

5. Véhicule automobile selon la revendication 4, **caractérisé par** un dispositif de guidage à rainure et clavette servant de dispositif de connexion au châssis du véhicule (21), l'un (20) des deux composants (16, 20) du dispositif de guidage à rainure et clavette étant façonné d'une seule pièce avec le châssis du véhicule (8).

6. Véhicule selon la revendication 4 ou 5, **caractérisé par** une connexion par vissage, rainure ou encliquetage, en tant que dispositif de connexion à la carrosserie (5).

7. Module intégré faisant partie d'un véhicule automobile comprenant un phare de véhicule (1) selon l'une quelconque des revendications 1 à 3 et au moins un autre composant parmi la liste suivante :
- dispositif de connexion au châssis du véhicule (9 ; 15 ; 21),
- dispositif de connexion à la carrosserie (5),
- élément de carrosserie (6), notamment aile,
- composant absorbant l'énergie pour amortir le choc d'un véhicule automobile ainsi équipé avec un autre objet,
- installation de nettoyage de phare,
- dispositif d'aide au stationnement.
